# EUROPÄISCHE PATENTSCHRIFT

(11) **EP 1 676 128 B1**
(45) Veröffentlichungstag und Bekanntmachung des Hinweises auf die Patenterteilung: **20.02.2008**
(21) Anmeldenummer: 04790247.3
(22) Anmeldetag: 11.10.2004
(51) Int. Cl.: G01N 29/26, G01B 11/00, G01B 11/24

(54) **VERFAHREN UND VORRICHTUNG ZUR PRÜFUNG EINES EINE KOMPLEXE OBERFLÄCHENKONTUR AUFWEISENDEN BAUTEILS MITTELS ULTRASCHALL**
METHOD AND DEVICE FOR TESTING A COMPONENT HAVING A COMPLEX SURFACE CONTOUR BY MEANS OF ULTRASOUND
PROCEDE ET DISPOSITIF POUR CONTROLER PAR ULTRASONS UN ELEMENT DE CONSTRUCTION POURVU D'UNE SURFACE AU CONTOUR COMPLEXE

(30) Priorität: 24.10.2003 DE 10349948
(43) Veröffentlichungstag der Anmeldung: 05.07.2006
(73) Patentinhaber: GE Inspection Technologies GmbH, 50354 Hürth (DE)
(72) Erfinder: HAASE, Wolfgang, 63877 Sailauf (DE); FINGER, Gerhard, 63694 Limeshain (DE); KOCH, Roman, 63825 Blankenbach (DE)
(74) Vertreter: Stoffregen, Hans-Herbert
(86) Internationale Anmeldenummer: PCT/EP2004/011331
(87) Internationale Veröffentlichungsnummer: WO 2005/043151

(56) Entgegenhaltungen:
- EP-A- 0 489 161
- FR-A1- 2 642 833
- US-A- 4 311 052
- PATENT ABSTRACTS OF JAPAN Bd. 013, Nr. 146 (P-854), 11. April 1989 (1989-04-11) & JP 63 309852 A (NIPPON STEEL CORP), 16. Dezember 1988 (1988-12-16)

## Beschreibung

Die Erfindung bezieht sich auf ein Verfahren zur Prüfung eines eine komplexe Oberflächenkontur aufweisenden Bauteils mittels Ultraschall, wobei zumindest ein Ultraschallprüfkopf mittels eines mehrere Achsantriebe aufweisenden Manipulators in mehreren Achsen mit definiertem Abstand entlang der Oberflächenkontur des Bauteils geführt wird und wobei entsprechend der Bewegung zumindest eines Antriebs äquidistante Impulse als Triggersignale zur geometrisch korrekten Zuordnung von empfangenen Ultraschallmesswerten zur Oberflächenkontur des Bauteils erzeugt werden, sowie auf eine Vorrichtung zur Prüfung eines eine komplexe Oberflächenkontur aufweisenden Bauteils, umfassend einen mittels Achsantrieben in einen oder mehreren Achsen verfahrbaren Manipulator, mit dem zumindest ein Ultraschallprüfkopf mit definiertem Abstand entlang der Oberflächenkontur des Bauteils verfahrbar ist, wobei die Achsantriebe mittels einer Steuerung ansteuerbar sind und wobei zumindest ein Encoder zur Erzeugung von Triggerimpulsen zur geometrisch korrekten Zuordnung von empfangenen Ultraschallmesswerten zur Oberflächenkontur des Bauteils vorgesehen ist.

Aus einem internen Stand der Technik ist ein Verfahren zur Prüfung eines eine komplexe Oberflächenkontur aufweisenden Bauteils mittels Ultraschall bekannt, wobei an einem herkömmlichen Mehrachsen-Prüfmanipulator ein oder mehrere Ultraschallgeber angeordnet sind, welche entlang einer geraden oder leicht gekrümmten Oberflächenkontur eines Bauteils zur Prüfung dieses verfahren werden. Zumindest ein Achsantrieb des Manipulators ist zur Erzeugung von Triggerimpulsen für eine Ultraschallsteuereinheit mit vorzugsweise einem optischen Encoder ausgestattet. Dieser Encoder ist jeweils einer Hauptachse wie X-Achse zugeordnet. Bei einer automatisierten Prüfung des Bauteils erzeugt der Encoder entsprechend der Bewegung des zugehörigen Achsantriebes äquidistante Impulse für einen Bewegungsvektor der angeschlossenen Achse. Die äquidistanten Impulse sind als Trigger zur geometrisch korrekten Zuordnung der Ultraschallmesswerte zum Prüfteil notwendig.

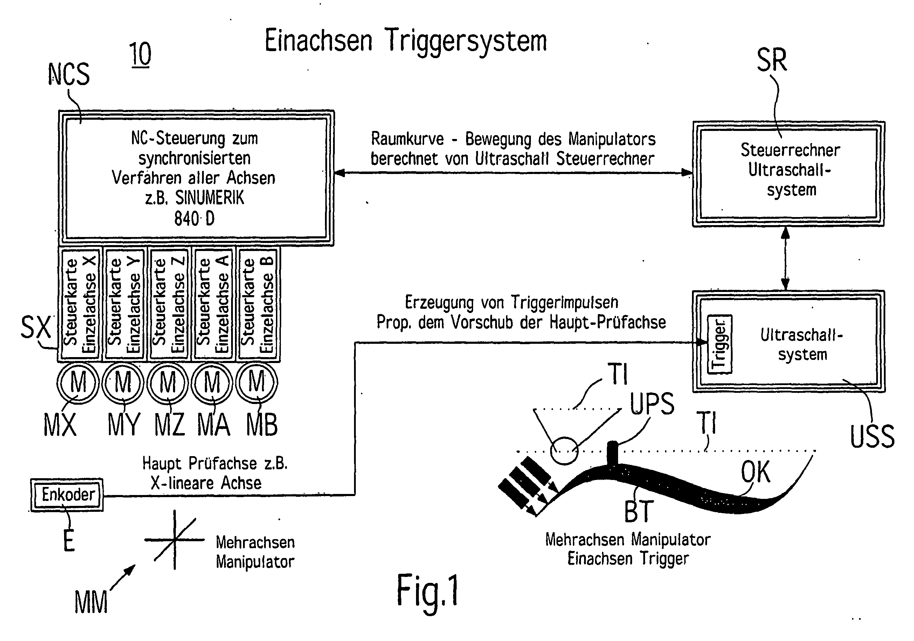

Eine Vorrichtung 10 mit Einachsen-Triggersystem nach diesem Stand der Technik ist in Fig. 1 dargestellt. Die Vorrichtung 10 umfasst einen Mehrachsenmanipulator 12, wobei jeder Achse wie beispielsweise X-Achse, Y-Achse, Z-Achse sowie ggf. Drehachsen wie A-Achse oder B-Achse jeweils ein Antrieb MX, MY, MZ, MA, MB zugeordnet ist, welche über entsprechende Steuerkarten SX, SY, SZ, SA, SB über eine NC-Steuerung NCS ansteuerbar sind. Einer der Achsantriebe, im dargestellten Beispiel der Antrieb MX der X-Achse, ist mit einem Encoder E gekoppelt, welcher entsprechend der Bewegung des zugehörigen Achsantriebes äquidistante Impulse an ein Ultraschallsystem USS abgibt. Dabei werden die Triggerimpulse proportional dem Vorschub der linearen X-Achse erzeugt. Das Ultraschallsystem USS ist mit einem Steuerrechner SR gekoppelt, welcher wiederum mit der NC-Steuerung des Mehrfachmanipulators verbunden ist.

Wenn die Geometrie der Oberflächenkontur des zu prüfenden Bauteils in Haupt-Prüfrichtung komplex gekrümmt ist, kann mit einer Einachsen-Triggererzeugung keine ausreichende Genauigkeit der oberflächengetreuen Datenaufnahme gewährleistet werden. Oberflächengetreue Datenaufnahme bedeutet in diesem Sinne, dass ein äquidistantes Messpunktgitter auf der Oberfläche des Bauteils für die spätere Darstellung der Messergebnisse als fixiertes C-Bild zur Verfügung gestellt wird.

In der DE-T- 690 03 090 wird ein Kalibrierungsverfahren eines dreidimensionalen Formerfassungssystems und ein System zur Durchführung des genannten Verfahrens beschrieben. Das beschriebene Kalibrierungsverfahren zielt darauf ab, ein neues Eichverfahren zu schaffen, welches von dem Aufbau einer Sensoreinheit unabhängig ist und dementsprechend keine vorherige physische Messung von geometrischen Parametern erfordert. Bei dem Verfahren wird die Kenntnis der geometrischen Parameter der Sensoreinheit durch die eines einfach zu bemaßenden Kalibrierobjektes ersetzt. Die Aufstellung einer Zwischentransferfunktion erfolgt direkt durch eine Erfassung der Rohinformation unter denselben Bedingungen, wie die spätere Messung der Punkte eines Objektes, so dass dadurch eine Fehlerhäufung vermieden werden kann.

Die EP-A- 0 489 161 bezieht sich auf einen Ultraschall-Riss-Detektor. Abstandssensoren und ein Ultraschalltastkopf sind miteinander als eine einheitliche Struktur verbunden, so dass der Abstandssensor zusammen mit dem Ultraschallprüfkopf über die Scannlinien geführt wird. Die Oberflächenabtastung eines Objektes W mittels des Abstandssensors erfolgt parallel mit der Risserfassung durch den Ultraschallprüfkopf. Der Risserfassungsbereich ist in eine Vielzahl kleinerer Bereiche unterteilt, wobei eine Vielzahl von Speicherbereichen ähnlich eines Netzes in einem Speicher abgelegt werden. Nur ein Flächenwert des Positionsspeicherbereiches enthält den Risserfassungsbereich und ist in jedem der Speicherbereiche gespeichert. Basierend auf diesen gespeicherten Formdaten kann die Position und der Winkel bzw. Lage des Ultraschallprüflcopfes in jedem der Rissdetektionspunkte gesteuert werden.

Davon ausgehend liegt der Erfindung das Problem zu Grunde, ein Verfahren und eine Vorrichtung der zuvor genannten Art dahingehend weiterzuentwickeln, dass auch bei Bauteilen mit komplex gekrümmter Oberflächenkontur eine hohe Messgenauigkeit gewährleistet ist.

Das Problem wird u. a. verfahrensmäßig dadurch gelöst, dass die Länge einer die Oberflächenkontur wiedergebende Oberflächenlinie berechnet wird, dass Stützpunkte zur Führung des Ultraschallprüfkopfes berechnet werden, dass die Achsantriebe des Manipulators entlang der vorausberechneten Stützpunkte synchron verfahren werden und dass ein Trigger-Antrieb synchronisiert mit den Achsantrieben angesteuert und zusammen mit allen im Eingriff befindlichen Achsantrieben entsprechend der vorausberechneten Oberflächenlinie verfahren wird, wobei der Trigger-Antrieb der Oberflächenlinie fiktiv nachgerührt wird und bezogen auf die Oberflächenlinie äquidistante Triggerimpulse generiert.

Grundgedanke des Verfahrens ist es, mit Hilfe eines bahnsynchron zu verfahrenden zusätzlichen Motors bzw. Antriebs mit angeschlossenem Encoder zur Erzeugung von Triggerimpulsen eine oberflächengetreue Messwertzuordnung auch bei Bauteilen mit komplex gekrümmten Oberflächenkonturen zu gewährleisten.

Hierbei ist vorgesehen, dass eine Vorausberechnung einer Oberflächenlinie, insbesondere deren Länge entsprechend einer manuell eingegebenen oder aus CAD-Daten übernommenen Geometrie des zu prüfenden Bauteils berechnet wird. Die Berechnung wird vorzugsweise in einem Steuerrechner des Ultraschallsystems durchgeführt. Ferner werden Stützpunkte des Mehrachsen-Manipulators zur Führung des Ultraschall-Prüfkopfsystems in definiertem Abstand entlang der Oberflächenkontur des Bauteils im Steuerrechner des Ultraschallsystems berechnet. Dabei wird beispielsweise eine mäanderförmige Messfahrt über die Oberflächenkontur des Bauteils durchgeführt.

Anschließend wird beim synchronisierten Verfahren der mehreren Antriebsachsen des Mehrachsen-Manipulators im Raum entlang der vorausberechneten und der NC-Steuerung übergebenen Stützpunkte der zusätzliche Motor als sogenannter Trigger-Antrieb bzw. Raumtrigger (virtuelle Achse) synchronisiert von der NC-Steuerung zusammen mit allen anderen im Eingriff befindlichen Achsantrieben entsprechend der vorausberechneten Oberflächenlinie verfahren. Durch das synchronisierte Verfahren der eigentlichen Bewegungsachsen zur exakten Führung des Ultraschall-Prüfkopfsystems in definiertem Abstand entlang der Oberflächenkontur des Bauteils und der Raumtriggerachse ist gewährleistet, dass die Raumtriggerachse die Oberflächenlinie fiktiv nachführt und somit äquidistante Impulse über den angeschlossenen Encoder an das Ultraschallsystem ausgibt.

Das Problem wird durch eine Vorrichtung dadurch gelöst, dass zusätzlich zu den Achsantrieben ein Trigger-Antrieb zur Erzeugung der Triggerimpulse vorgesehen ist, dass der Trigger-Antrieb synchronisiert mit den Achsantrieben des Manipulators ansteuerbar ist, wobei die Achsantriebe entlang von vorausberechneten Stützpunkten synchron verfahrbar sind und der Trigger-Antrieb synchronisiert von der Steuerung zusammen mit den Achsantrieben entsprechend einer vorausberechneten Länge einer die Oberflächenkontur wiedergebenden Oberflächenlinie verfahrbar ist und dass an dem Encoder (E) des Trigger-Antriebs Triggerimpulse anliegen, die bezogen auf die Oberflächenlinie der komplexen Oberflächenkontur äquidistant sind.

Zusätzlich zu den vorhandenen Achsantrieben des Mehrachsen-Manipulators wird eine weitere Achse bzw. ein Trigger-Antrieb definiert, d. h. ein an die NC-Steuerung angeschlossener Motor, welcher beim synchronisierten Verfahren der Achsantriebe des Mehrachsen-Manipulators im Raum entlang vorausberechneter Stützpunkte synchronisiert und von der NC-Steuerung zusammen mit allen anderen im Eingriff befindlichen Achsen entsprechend der vorausberechneten Oberflächenlinie verfahren wird, so dass gewährleistet ist, dass der Trigger-Antrieb die Oberflächenlinie fiktiv nachführt und somit äquidistante Impulse über den angeschlossenen Encoder an das Ultraschallsystem liefert.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Anordnung zur Prüfung eines Bauteils mittels Ultraschall mit Einachsen-Triggersystem nach dem Stand der Technik,
- Fig. 2 a, b: Prinzipdarstellungen eines Manipulatorsystems,
- Fig. 3: eine Anordnung zur Prüfung eines Bauteils mittels Ultraschall mit Raumgitter-Triggersystem und
- Fig. 4: ein Flussdiagramm mit Ablaufschritten zur Durchführung des Verfahrens zur Prüfung eines eine komplexe Oberflächenkontur aufweisenden Bauteils mittels Ultraschall.

Fig. 1 zeigt eine Anordnung 10 zur Prüfung eines eine Oberflächenkontur OK aufweisenden Bauteils BT mittels eines Einachsen-Triggersystems, welches in der Beschreibungseinleitung bereits ausführlich beschrieben wurde.

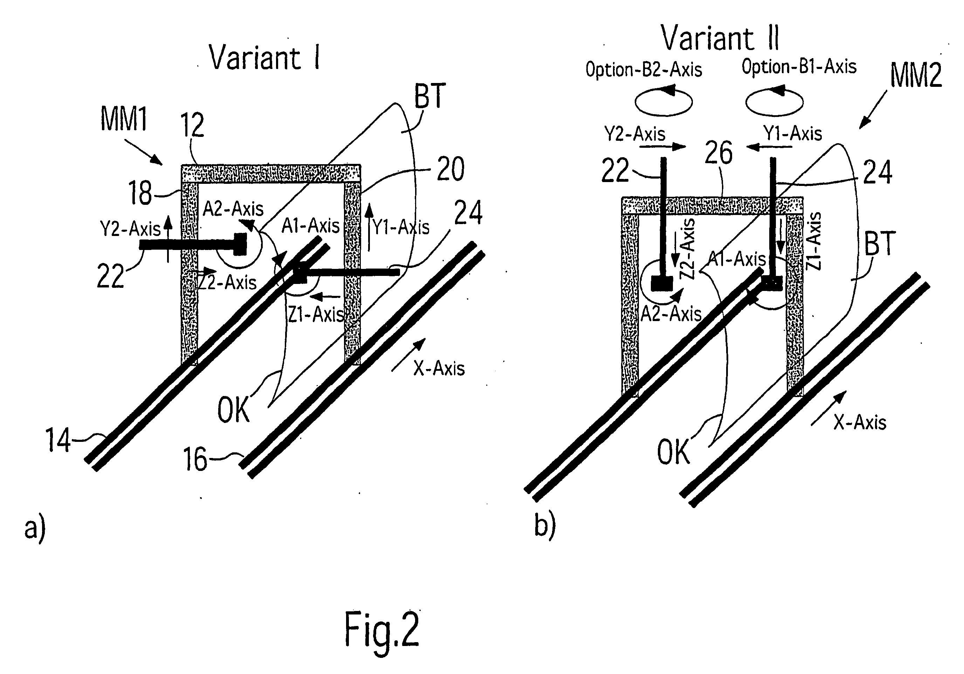

Die Fig. 2a) und b) zeigen zwei Ausführungsformen des Mehrachsen-Manipulators MM zur Führung eines Ultraschall-Prüfkopfsystems UPS in definiertem Abstand A entlang der Oberflächenkontur OK des Bauteils BK. Gemäß einer ersten Ausführungsform umfasst der Mehrachsen-Manipulator MM1 ein im Wesentlichen U-förmiges Gestell 12, welches bodenseitig entlang von Führungsschienen 14, 16 entlang einer ersten Achse wie X-Achse mittels eines Antriebs MX verfahrbar ist. Dabei umschließt das U-förmige Gestell beim Verfahren in X-Richtung im Wesentlichen das zu prüfende Bauteil BT. An vertikal verlaufenden Schenkeln 18, 20 des Gestells 12 sind entlang einer weiteren Achse wie Y-Achse verfahrbare Halteelemente 22, 24 angebracht, an denen das Ultraschall-Prüfkopfsystem UPS befestigt ist. Ferner sind die Halteelemente 22, 24 entlang einer noch weiteren Achse wie Z-Achse, in Richtung auf das zu prüfende Bauteil BT zu und von diesem weg bewegbar. Ferner ist eine Rotation des Ultraschall-Prütkopfsystems UPS um eine Längsachse wie A-Achse des Halteelementes 22, 24 möglich.

Ein in Fig. 2b dargestellter Mehrachsen-Manipulator MM2 unterscheidet sich von dem in Fig. 2 a dargestellten Manipulator MM1 dadurch, dass die Halteelemente 22, 24 nicht an den vertikal verlaufenden Schenkeln 18, 20 des Gestells 12 angeordnet sind, sondern entlang einer Y-Achse eines oberen, horizontal verlaufenden Querträgers 26 verfahrbar sind. Ferner sind die Halteelemente 22, 24 entlang einer vertikal verlaufenden Z-Achse verfahrbar. Das Ultraschall-Prüfkopfsystem UPS ist zudem um eine A-Achse schwenkbar angeordnet. Optional ist vorgesehen, dass die Halteelemente 22, 24 um ihre Längsachse, im vorliegenden Fall um eine B-Achse, drehbar sind.

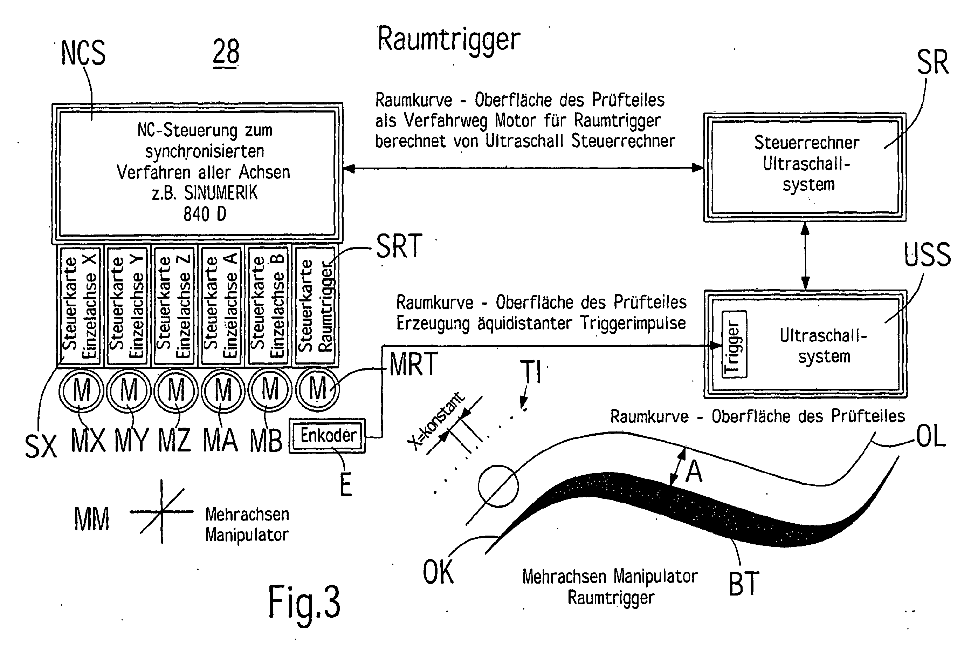

Fig. 3 zeigt eine Anordnung 28 zur Prüfung eines eine komplexe Oberflächenkontur OK aufweisenden Bauteils BT mittels Ultraschall. Die Anordnung umfasst den Mehrachsen-Manipulator MM zur Führung des Ultraschall-Prüfkopfsystems UPS in definiertem Abstand A entlang der Oberflächenkontur OK des Bauteils BT. Der Mehrachsen-Manipulator MM umfasst die Antriebe MX, MY, MZ, MA, MB zum Antrieb der einzelnen Achsen wie X-Achse, Y-Achse, Z-Achse, A-Achse und B-Achse, welche über Steuerkarten SX, SY, SZ, SA, SB mit der Steuerung NCS gekoppelt sind. Gemäß der Erfindung ist ein weiterer Antrieb bzw. Motor MRT vorgesehen, der über eine Steuerkarte SRT mit der Steuerung NCS verbunden ist. Der Motor MRT ist mit einem Encoder E gekoppelt, der Triggersignale an ein Ultraschallsystem USS liefert, welches mit einem Steuerrechner SR verbunden ist, der wiederum mit der Steuerung des Mehrachsen-Manipulators NCS verbunden ist.

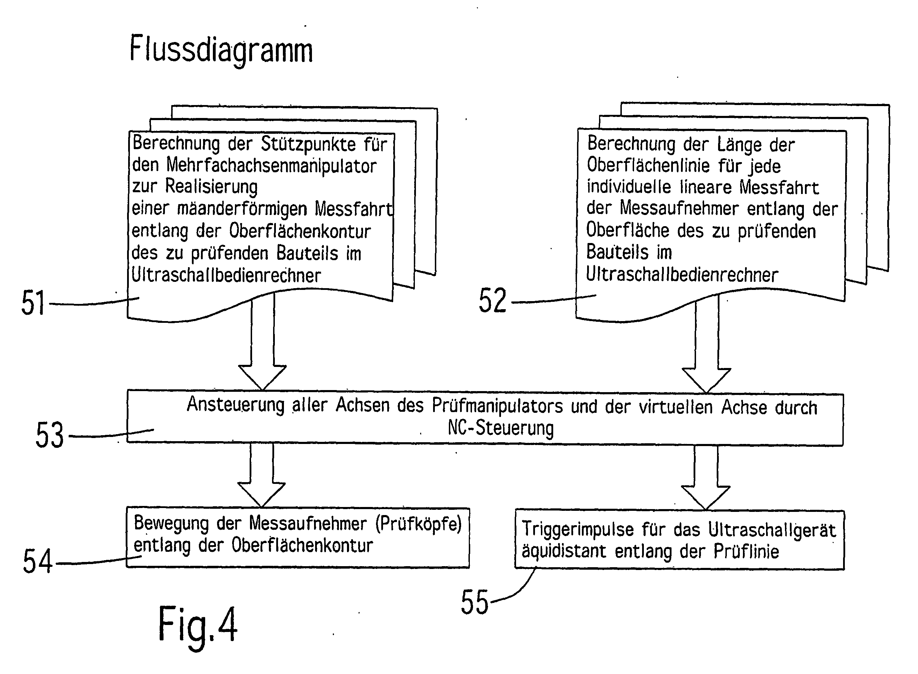

Fig. 4 zeigt ein Flussdiagramm des Verfahrens. In dem Steuerrechner für das Ultraschallsystem SR werden eine Oberflächenlinie OL, insbesondere deren Länge entsprechend von manuell eingegebenen oder aus CAD-Daten übernommenen Geometrie des zu prüfenden Bauteils BT berechnet (Schnitt S2). Anschließend erfolgt eine Vorausberechnung von Stützpunkten des Mehrachsen-Manipulators MM zur Führung des Ultraschall-Prüfkopfsystems UPS in definiertem Abstand A (Schnitt S1). Diese Berechnung erfolgt ebenfalls im Steuerrechner SR des Ultraschall-Systems.

Vorzugsweise wird eine mäanderförmige Messfahrt über die Oberflächenkontur OK des Bauteils BT durchgeführt. Beim synchronen Verfahren der Achsen im Raum entlang der voraus berechneten und der Steuerung NCS übergebenen Stützpunkte wird der Raumtriggennotor MRT, der als virtuelle Achse angesehen werden kann, synchronisiert von der NC-Steuerung NCS zusammen mit den anderen Achsen, welche sich im Eingriff befinden, entsprechend der vorausberechneten Oberflächenlinie OL verfahren (Schnitt S3). Durch das synchronisierte Verfahren der eigentlichen Bewegungsachsen, d. h. der X-, Y-, Z-, A- und B-Achsen zur exakten Führung des Ultraschall-Prüfkopfsystems UPS in definiertem Abstand A entlang der Oberfläche OK sowie durch Verfahren der Raumtriggerachse des Raumtriggermotors MRT ist gewährleistet, dass die Raumtriggerachse fiktiv die Oberflächenlinie OL nachführt (Schnitt S4) und somit äquidistante Impulse TI über den angeschlossenen Encoder E an das Ultraschallsystem USS abgegeben werden (Schnitt S5).

Dadurch wird eine ausreichende Genauigkeit der oberflächengetreuen Datenaufnahme, d. h. ein äquidistantes Messpunktgitter an der Oberfläche des Bauteils für die spätere Darstellung der Messergebnisse als pixeliertes C-Bild gewährleistet.

## Patentansprüche

1. Verfahren zur Prüfung eines eine komplexe Oberflächenkontur (OK) aufweisenden Bauteils (BT) mittels Ultraschall, wobei zumindest ein Ultraschallprüfkopf (UPK) mittels eines mehrere Achsantriebe (MX, MJ, MZ, MA, MB) aufweisenden Manipulators (MM) in mehreren Achsen mit definiertem Abstand (A) entlang der Oberflächenkontur (OK) des Bauteils (BT) geführt wird und wobei entsprechend der Bewegung zumindest eines Antriebs äquidistante Impulse als Triggersignale zur geometrisch korrekten Zuordnung von empfangenen Ultraschallmesswerten zur Oberflächenkontur (OK) des Bauteils erzeugt werden,
**dadurch gekennzeichnet,**
**dass** die Länge einer die Oberflächenkontur (OK) wiedergebende Oberflächenlinie (OL) berechnet wird,
**dass** Stützpunkte zur Führung des Ultraschallprüfkopfes (UPK) berechnet werden,
**dass** die Achsantriebe (MX, MJ, MZ, MA, MB) des Manipulators (MM) entlang der vorausberechneten Stützpunkte synchron verfahren werden und
**dass** ein Trigger-Antrieb (MRT) synchronisiert mit den Achsantrieben (MX, MJ, MZ, MA, MB) angesteuert und zusammen mit allen im Eingriff befindlichen Achsantrieben entsprechend der vorausberechneten Oberflächenlinie (OL) verfahren wird, wobei der Trigger-Antrieb (MRT) der Oberflächenlinie (OL) fiktiv nachgeführt wird und bezogen auf die Oberflächenlinie (OL) äquidistante Triggerimpulse generiert.

2. Verfahren nach Anspruch 1,
**dadurch gekennzeichnet,**
**dass** die Länge der Oberflächenlinie (OL) für jede individuelle lineare Messfahrt des Ultraschallprüfkopfes (UPK) entlang der Oberflächenkontur des zu prüfenden Bauteils berechnet wird.

3. Verfahren nach Anspruch 1 oder 2,
**dadurch gekennzeichnet,**
**dass** die Stützpunkte zur Realisierung einer mäanderförmigen Messfahrt entlang der Oberflächenkontur (OK) des zu prüfenden Bauteils berechnet werden.

4. Verfahren nach zumindest einem der vorhergehenden Ansprüche,
**dadurch gekennzeichnet,**
**dass** die Ansteuerung aller Achsantriebe (MX, MY, MZ, MA, MB) und des Trigger-Antriebes (MRT) durch eine NC-Steuerung durchgeführt wird.

5. Verfahren nach zumindest einem der vorhergehenden Ansprüche,
**dadurch gekennzeichnet,**
**dass** die Triggerimpulse für ein den Prüfkopf ansteuerndes Ultraschallgerät äquidistant entlang der Oberflächenlinie (OL) erzeugt werden.

6. Vorrichtung zur Prüfung eines eine komplexe Oberflächenkontur (OK) aufweisenden Bauteils (BT), umfassend einen mittels Achsantrieben (MX, MY, MZ, MA, MB) in einer oder mehreren Achsen verfahrbaren Manipulator (MM), mit dem zumindest ein Ultraschallprüfkopf (UPK) mit definiertem Abstand entlang der Oberflächenkontur (OK) des Bauteils (BT) verfahrbar ist, wobei die Achsantriebe mittels einer Steuerung (NCS) ansteuerbar sind und wobei zumindest ein Encoder (E) zur Erzeugung von Triggerimpulsen zur geometrisch korrekten Zuordnung von empfangenen Ultraschallmesswerten zur Oberflächenkontur des Bauteils vorgesehen ist,
**dadurch gekennzeichnet,**
**dass** zusätzlich zu den Achsantrieben (MX, MY, MZ, MA, MB) ein Trigger-Antrieb (MRT) zur Erzeugung der Triggerimpulse vorgesehen ist,
**dass** der Trigger-Antrieb (MRT) synchronisiert mit den Achsantrieben (MX, MY, MZ, MA, MB) des Manipulators (MM) ansteuerbar ist, wobei die Achsantriebe entlang von vorausberechneten Stützpunkten synchron verfahrbar sind und der Trigger-Antrieb (MRT) synchronisiert von der Steuerung (NCS) zusammen mit den Achsantrieben entsprechend einer vorausberechneten Länge einer die Oberflächenkontur OK wiedergebenden Oberflächenlinie (OL) verfahrbar ist und
**dass** an dem Encoder (E) des Trigger-Antriebs (RMT) Triggerimpulse anliegen, die bezogen auf die Oberflächenlinie (OL) der komplexen Oberflächenkontur (OK) äquidistant sind.

## Claims

1. A method of testing a structural component (BT) having a complex surface contour (OK) by means of ultrasound, wherein at least one ultrasonic probe (UPK) is guided by means of a manipulator (MNI) having several axial drives (MX, MJ, MZ, MA, MB) in a plurality of axes at a defined spacing (A) along the surface contour (OK) of the structural component (BT) and wherein, according to the movement of at least one drive, equidistant pulses are generated as trigger signals for the geometrically correct allocation of received ultrasonic test data for the surface contour (OK) of the structural component,
**characterized in**
**that** the length of a surface line (OL) reproducing the surface contour (OK) is calculated,
**that** support points for guiding the ultrasonic probe (UPK) are calculated,
**that** the axial drives (MX, MJ, MZ, MA, MB) of the manipulator (MM) are moved synchronously along the predetermined support points, and
**that** a trigger drive (MRT) is controlled in synchronism with the axial drives (MX, MJ, MZ, MA, MB) and, together with all engaged axial drives, is displaced in accordance with the predetermined surface line (OL), the trigger drive (MRT) being notionally tracked along the surface line (OL) and equidistant trigger pulses being generated relative to the surface line (OL).

2. The method according to claim 1,
**characterized in**
**that** the length of the surface line (OL) is calculated for each individual linear measuring movement of the ultrasonic probe (UPK) along the surface contour of the structural component to be tested.

3. The method according to claim 1 or 2,
**characterized in**
**that** the support points are calculated for realization of a meander-shaped measurement movement along the surface contour (OK) of the structural component to be tested.

4. The method according to at least one of the preceding claims,
**characterized in**
**that** the control of all axial drives (MX, MY, MZ, MA, MB) and of the trigger drive (MRT) are effected by an NC control.

5. The method according to at least one of the preceding claims,
**characterized in**
**that** the trigger pulses are generated for an ultrasonic device guiding the probe equidistantly along the surface line (OL).

6. A device for testing a structural component (BT) having a complex surface contour (OK), comprising a manipulator (MM) movable in one or more axes by means of axial drives (N>X, MY, MZ, MA, MB), by which at least one ultrasonic probe (UPK) is displaceable at a defined spacing along the surface contour (OK) of the structural component (BT), the axial drives being controllable by means of a control (NCS) and at least one encoder (E) being provided for generating trigger pulses for the geometrically correct allocation of received ultrasonic test data for the surface contour of the structural part,
**characterized in**
**that**, in addition to the axial drives (MX, MY, MZ, MA, MB), a trigger drive (MRT) is provided for generating the trigger pulses,
**that** the trigger drive (MRT) is controllable in synchronism with the axial drives (MX, MY, MZ, MA, MB) of the manipulator (MM), the axial drives being synchronously displaceable along predetermined support points and the trigger drive (MRT), synchronized by the control (NCS), being movable together with the axial drives according to a predetermined length of a surface line (OL) reproducing the surface contour (OK), and
**that** trigger pulses are applied to the encoder (E) of the trigger drive (RMT) which are equidistant relative to the surface line (OL) of the complex surface contour (OK).

## Revendications

1. Procédé pour contrôler par ultrasons un élément de construction (BT) pourvu d'une surface au contour complexe (OK), selon lequel au moins une tête de contrôle par ultrasons (UPK) est guidée au moyen d'un manipulateur (MM) comportant plusieurs entraînements axiaux (MX, MJ, MZ, MA, MB), sur plusieurs axes avec distance définie (A) le long du contour de la surface (OK) de l'élément de construction (BT), et on produit, en fonction du déplacement d'au moins un entraînement, des impulsions équidistantes comme signaux d'excitation pour associer de façon géométriquement correcte les valeurs de mesures par ultrasons reçues, au contour de la surface (OK) de l'élément de construction,
**caractérisé en ce qu'**
on calcule la longueur d'une ligne superficielle (OL) reproduisant le contour de la surface (OK),
on calcule des points d'appui pour guider la tête de contrôle par ultrasons (UPK),
on déplace les entraînements axiaux (MX, MJ, MZ, MA, MB) du manipulateur (MM) de façon synchronisée le long des points d'appui préalablement calculés, et
on commande un entraînement d'excitation (MRT) de façon synchronisée avec les entraînements axiaux (MX, MJ, MZ, MA, MB), et on le déplace avec tous les entraînements axiaux qui se trouvent en prise, en fonction de la ligne superficielle (OL) préalablement calculée, et l'entraînement d'excitation (MRT) suit fictivement la ligne superficielle (OL) et génère des impulsions d'excitation équidistantes, rapportées à la ligne superficielle (OL).

2. Procédé selon la revendication 1,
**caractérisé en ce qu'**
on calcule la longueur de la ligne superficielle (OL) pour chaque trajet de mesure linéaire individuel de la tête de contrôle par ultrasons (UPK) le long du contour de la surface de l'élément de construction à contrôler.

3. Procédé selon la revendication 1 ou 2,
**caractérisé en ce que**
les points d'appuis pour la réalisation d'un trajet de mesure en méandres sont calculés le long du contour de la surface (OK) de l'élément de construction à contrôler.

4. Procédé selon au moins une des revendications précédentes,
**caractérisé en ce que**
la commande de tous les entraînements axiaux (MX, MY, MZ, MA, MB) et de l'entraînement d'excitation (MRT) est effectuée par une commande numérique.

5. Procédé selon au moins une des revendications précédentes,
**caractérisé en ce que**
les impulsions d'excitation pour un appareil à ultrasons commandant la tête de contrôle sont produites le long de la ligne superficielle (OL).

6. Dispositif pour contrôler un élément de construction (BT) pourvu d'une surface au contour complexe (OK), comprenant un manipulateur (MM) mobile sur un ou plusieurs axes au moyen d'entraînements axiaux (MX, MY, MZ, MA, MB), avec lequel au moins une tête de contrôle par ultrasons (UPK) est mobile avec distance définie le long du contour de la surface (OK) de l'élément de construction (BT), dans lequel les entraînements axiaux sont commandés au moyen d'une commande (NCS) et au moins un codeur (E) est prévu pour produire des impulsions d'excitation pour associer de façon géométriquement correcte les valeurs de mesures par ultrasons reçues au contour de la surface de l'élément de construction,
**caractérisé en ce qu'**
en plus des entraînements axiaux (MX, MY, MZ, MA, MB), un entraînement d'excitation (MRT) pour produire les impulsions d'excitation (MRT),
est commandé de façon synchronisée avec les entraînements axiaux (MX, MY, MZ, MA, MB) du manipulateur (MM), les entraînements axiaux sont mobiles de façon synchronisée le long de points d'appui préalablement calculés et l'entraînement d'excitation (MRT) est déplacé par la commande (NCS), de façon synchronisée avec les entraînements axiaux, en fonction de la longueur préalablement calculée d'une ligne superficielle (OL) reproduisant le contour de la surface OK, et
des impulsions d'excitation qui, rapportées à la ligne superficielle (OL) du contour complexe de la surface (OK), sont équidistantes, arrivent sur le codeur (E) de l'entraînement d'excitation (RMT).
